# EUROPÄISCHE PATENTSCHRIFT

(11) **EP 2 995 581 B1**
(45) Veröffentlichungstag und Bekanntmachung des Hinweises auf die Patenterteilung: **12.08.2020**
(21) Anmeldenummer: 15002254.9
(22) Anmeldetag: 21.03.2014
(51) Int. Cl.: B65G 57/08, B65G 57/16

(54) **STAPELSTATION FÜR EINE THERMOFORMANLAGE, VERFAHREN ZUM HERSTELLEN VON BECHERFÖRMIGEN PRODUKTEN SOWIE THERMOFORMANLAGE**
STACKING STATION FOR A THERMOFORMING ASSEMBLY, METHOD FOR MANUFACTURING CUP-SHAPED PRODUCTS AND THERMOFORMING ASSEMBLY
STATION D'EMPILEMENT POUR UNE INSTALLATION DE THERMOFORMAGE, PROCEDE DE FABRICATION DE PRODUITS EN FORME DE GOBELETS ET INSTALLATION DE THERMOFORMAGE

(30) Priorität: 22.03.2013 DE 102013004920
(43) Veröffentlichungstag der Anmeldung: 16.03.2016
(62) Teilanmeldung aus: 14728410.3
(73) Patentinhaber: Kiefel GmbH, 83395 Freilassing (DE)
(72) Erfinder: Wieser, Gerhard, DE - 83451 Piding (DE); Knoll, Peter, DE - 83404 Ainring (DE)
(74) Vertreter: FARAGO Patentanwälte

(56) Entgegenhaltungen:
- EP-A2- 0 995 582
- EP-A2- 2 407 846
- DE-A1- 2 541 531
- DE-A1- 4 244 089
- DE-C1- 4 436 531
- GB-A- 2 061 237

## Beschreibung

Die Erfindung betrifft eine Thermoformanlage mit einer Stapelstation sowie ein Verfahren zum Herstellen von becherförmigen Produkten mittels der Thermoformanlage.

Thermoformanlagen sind im Stand der Technik zahlreich bekannt. Sie werden eingesetzt zum thermoplastischen Verformen von Kunststoffen. Die Kunststoffe werden im Allgemeinen als Endlosfolienbahn oder als einzelne Kunststofflagen in die Anlage hineingegeben. Innerhalb der Thermoformanlage durchläuft der Kunststoff mehrere Stationen. Üblicherweise sind dies eine Heizstation, eine Formstation, oft eine Vereinzelungsstation, und je nach Anwendungsfall eine Stapelstation. Eine Stapelstation hat die Aufgabe, becherförmige Produkte durch Ineinandersetzen zu stapeln, sodass sich Stangenware ergibt. Die "Becherform" ist dabei weitläufig zu verstehen. Prinzipiell kommt es darauf an, dass sich ein Produkt in ein mit ihm hergestelltes anderes, identisches Produkt einfügen lässt, so dass sich eine Vielzahl solcher identischer Produkte zu einer Stange stapeln lassen. Die Becher können dabei offen oder geschlossen sein, und sie können im Grundriss rund oder anders geformt sein, wie beispielsweise rechteckig. Unter den hier wegen der einfachen Bezeichenbarkeit als "becherförmig" bezeichneten Produkten fallen somit prinzipiell alle denkbaren konkaven Gegenstände, wie Schalen, Teller, Becher oder desgleichen aus Kunststoff oder gegebenenfalls auch aus Papier oder weitere ähnliche Produkte. Insbesondere sei an Kunststoffschalen zur Verpackung von Fleisch, Obst und anderen Lebensmitteln gedacht.

Die DE 42 44 089 A1 offenbart eine Thermoformanlage mit einer Stapelstation. In einem Formwerkzeug in einer Formstation werden einzelne schalenförmige Gegenstände erzeugt. Diese sind allerdings noch nicht vollständig vereinzelt. Vielmehr geht die Druckschrift - wie die meisten Anlagen im Stand der Technik - davon aus, dass es von Vorteil ist, die Produkte noch mit kleinen Stegen verbunden zu lassen. Sie lassen sich dann erheblich leichter weitertransportieren. Erst in einer dem Formwerkzeug nachgelagerten Vereinzelungsstation ist ein Ausdrücker vorgesehen, der immer eine ganze Reihe der geformten Produkte aus dem miteinander verbundenen System herausdrückt. Die Platte von in einem Produktionsgang hergestellten Gegenständen, die an mindestens zwei Längskanten noch mit dem jeweils benachbarten Gegenstand durch Stege verbunden sind, werden als "Index" oder im Plural als "Indizes" bezeichnet, wobei diese Bezeichnung auch in der vorliegenden Anmeldung aufgegriffen wird. Innerhalb des Index' sind die Gegenstände in einem Raster angeordnet, also in Zeilen und Spalten, wobei als die Spalten die Anordnung längs zur Maschinenrichtung zu verstehen sein soll, und somit die Zeilen des Index' quer zur Maschinenrichtung zu verstehen sind.

Die DE 42 44 089 A1 drückt mit dem Ausdrücker immer eine Zeile der konkaven Gegenstände aus dem Index heraus. Diese liegen dann auf einem Kippstapler. Der Kippstapler ist schwenkbar an der Transporteinrichtung angeordnet, welche die Produkte in Form des Index' aus dem Formwerkzeug heraustransportiert. Der Kippstapler führt eine Kippbewegung durch, so dass die Gegenstände in eine neue Orientierung kommen. In der neuen Orientierung ist ein Stapelschieber vorgesehen, der die Produkte in der auf dem Kippstapler vorliegenden Stapelform auf ein als Querförderer bezeichnetes Transportband schiebt. Der Querförderer läuft quer zur Maschinenrichtung und übergibt die Stapel an ein Längsförderband.

Die EP 0 395 960 A1 zeigt einen Längsförderer, der in mehrere nebeneinanderliegende sowie in Transportrichtung ausgerichtete Schächte unterteilt ist.

Die DE 44 36 531 C1 offenbart eine Thermoformanlage nach dem Oberbegriff des Anspruchs 1 und ein Verfahren zum Überführen von mehrreihig aus einer thermoplastischen Folie geformten und ausgestanzten Artikeln in einreihige Stapel, wobei die pro Nutzen mehrreihig geformten Artikel ineinander gesetzt werden, sodass pro Takt eine Reihe von gestapelten Artikeln entsteht, und zwar mit einer Anzahl, die der Anzahl der pro Takt geformten Artikel entspricht. In einer Ausführungsform werden die Artikel direkt auf ein Förderband gestellt. In einer anderen Ausführungsform wird eine verschiebbare Stapelrinne Kante an Kante mit einem Artikelträger gestellt, sodass die Artikel vom Träger auf die verschiebbare Stapelrinne kippen

Bei einem gattungsfremden Verfahren gemäß der DE-OS 30 25 951 ist ein Breitspurförderer vorgesehen, wobei nach dem Verdrängungsprinzip der Vereinzelungsabschnitt gegenüber dem Breitspurförderer wesentlich verbreitert und aus mehreren nebeneinander verlaufenden Förderbändern gebildet ist. Diese Offenbarung nimmt jedoch keine Stapelung vor, sondern eine Hintereinanderreihung von Gegenständen.

Der hier vorliegenden Erfindung liegt die Aufgabe zugrunde, dem Stand der Technik eine Verbesserung oder eine Alternative zur Verfügung zu stellen.

Nach einem ersten Aspekt der Erfindung löst diese Aufgabe eine Thermoformanlage mit einer Stapelstation, eingerichtet zum Stapeln einer Vielzahl becherförmiger Produkte aus einem Index zu einem Stapel mit einer Stapelrichtung, wobei an der Stapelstation eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zu einer Maschinenrichtung angeordnet sind und die Zeilen quer zur Maschinenrichtung angeordnet sind, wobei sich die Stapelstation dadurch kennzeichnet, dass die Kippeinrichtung eine Kippkante mit einem daran anschließenden Fallschacht für die Produkte aufweist, wobei bevorzugt für jede Spalte Produkte ein Fallschacht vorgesehen ist, wobei die Stapelstation eine Vorstapeleinrichtung aufweist, welche aufwärts der Kippeinrichtung liegt, sodass die Stapelstation dazu eingerichtet ist, mehrere Produkte einer Spalte gleichzeitig als Vorstapel zu kippen, wobei die Stapelstation dazu eingerichtet ist, die gekippten Vorstapel jeder Spalte in Maschinenrichtung unmittelbar in einen jeweils zugehörigen aus der Stapelstation abzutransportierenden Stapel auszuschieben, wobei der Fallschacht der Stapelstation dazu eingerichtet ist, die Produkte von der Schwerkraft beschleunigt den Fallschacht entlang fallen zu lassen.Begrifflich sei hierzu folgendes erläutert:
Die "Stapelstation" übernimmt bevorzugt nur die Funktion des Stapelns der bereits vereinzelten Produkte, kann aber auch die Vereinzelung und gegebenenfalls auch einen weiteren Arbeitsschritt oder weitere Arbeitsschritte mit übernehmen
Generell sei daraufhingewiesen, dass im Rahmen der hier vorliegenden Patentanmeldung unbestimmte Artikel wie "ein", "zwei" usw. als "mindestens"-Angaben zu verstehen sind, also als "mindestens ein...", "mindestens zwei..." usw., sofern sich nicht aus dem jeweiligen Kontext etwa ergibt, dass dort nur "genau ein...", "genau zwei..." usw. gemeint sein soll.

Die "Stapelrichtung" sei als die Längserstreckungsrichtung des hergestellten Stapels verstanden, in einem einfachen Fall von beispielweise kreisrunden rotationssymmetrischen Produkten also die Rotationsachse.

Die "Ausrichtung abweichend von der Stapelrichtung" wird im Normalfall eine vertikale Richtung sein. Die Erfindung ist jedoch nicht auf eine vertikale Ausrichtung der einzelnen Produktlängsachsen, somit der potenziellen Stapelrichtung der Produkte, eingeschränkt. Ein "Fallschacht" zeichnet sich dadurch aus, dass er für die becherförmigen Produkte eine Fallstrecke zur Verfügung stellt. Diese kann auch sehr kurz sein. Der Eingang in die Fallstrecke muss mittelbar oder unmittelbar eine "Kippkante" aufweisen. Als eine Kippkante sei eine solche Kante zu verstehen, welche innerhalb der Stapelsatzstation die Funktion übernimmt, die Produkte zu kippen. Bevorzugt kann das Kippen durch Einfluss von Schwerkraft erfolgen. Die Kante kann massiv oder mit einer durchgehenden Stange oder mit von einer oder mehreren Seiten vorstehenden Bolzen ausgeführt sein. Auch beispielsweise eine Luftdruckunterstützung ist denkbar, um die Bewegung des Kippens an der Kippkante und der anschließenden Bewegung in den Fallschacht hinein zu unterstützen.

Die Erfindung bewirkt das Kippen der Produkte mit der Kippkante und dem Fallschacht. Die kosten- und wartungsaufwendige Kippstaplereinrichtung aus der DE 42 44 089 A1 kann somit vollständig entfallen. Bei idealer Ausgestaltung ist es sogar denkbar, dass sowohl die Kippkante als auch der Fallschacht jeweils keinerlei angetriebene Teile aufweisen.

Bevorzugt ist für jede Spalte der Produkte ein Fallschacht vorgesehen, insbesondere genau ein Fallschacht. Die Produkte bewegen sich in Maschinenrichtung vorwärts und liegen in einem Raster vor. Somit bewegt sich jede Spalte parallel zu ihrer benachbarten Spalte auf die Kippeinrichtung zu. Da die Kippkante das Kippen der Produkte bewirkt, aber der Fallschacht das Stabilisieren der Produkte unterstützt oder bewirkt, damit sich diese später leichter stapeln lassen, wird eine besonders große Präzision der Bewegung der einzelnen Produkte dann erreicht, wenn für jede Spalte aus dem Index genau ein Fallschacht vorgesehen ist, so dass konstruktiv in der Anlage für jede Spalte an Kavitäten im Formwerkzeug eben jener genau ein Fallschacht vorgesehen ist.

Eine bevorzugte Ausführungsform der Erfindung sieht vor, dass im Falle eines Fallschachts der eine Fallschacht beziehungsweise im Falle mehrerer Fallschächte die Fallschächte entweder einzeln oder gemeinsam als auswechselbares Modul vorgesehen ist beziehungsweise sind.

Je nach Ausgestaltung kann es für die Zuverlässigkeit des Kippens der Produkte von Bedeutung sein, dass die Geometrie des Fallschachts exakt auf die Geometrie des Formwerkzeugs und damit auf die Geometrie der hergestellten Produkte abgestimmt ist. Denn im Idealfall soll der Kippschacht eine Lageänderung des aus dem Index ausgestoßenen Produkts ohne weitere Antriebe ermöglichen können, also mit Hilfe der Schwerkraft eine Bewegung der Produkte ermöglichen. Ein Ideal auf ein Produkt abgestellter Fallschacht kann daher beispielsweise Führungskanten, Führungsleisten oder desgleichen für das sich durch ihn bewegende Produkt bereitstellen, und/oder der Fallschacht kann Bremseinrichtungen für das Produkt bereitstellen, und/oder der Fallschacht kann eine Umlenkung für das sich bewegende Produkt bereitstellen, oder desgleichen. Bei der Produktion einer Thermoformanlage ist es daher erstrebenswert, passend zu einem Formwerkzeug, welches im Allgemeinen auch aus einem Modul für sämtliche herzustellenden Produkte eines Index' besteht, in gleicher Weise den Fallschacht als ein dazu passendes Modul einsetzen zu können. Auch im Falle eines Auswechselns der herzustellenden Produkte beim Betreiber der Thermoformanlage ist es von Vorteil, wenn die Fallschächte als ein Modul pro Fallschacht oder als ein Modul für alle Fallschächte gewechselt werden kann. Idealerweise besteht ein Fallschachtmodul aus mehreren Fallschächten, welche miteinander verbunden, so dass im Falle eines Beschädigens eines der Fallschächte nicht das gesamte mehrschachtige Modul ausgewechselt werden muss, sondern lediglich der beschädigte einzelne Fallschacht ausgewechselt werden kann.

Der Fallschacht ist dazu eingerichtet, die Produkte von der Schwerkraft beschleunigt den Fallschacht entlang fallen zu lassen.

Die Produkte benötigen auf dem Wege von der Vereinzelung zur fertigen Stapelung üblicherweise zwei verschiedene Bewegungen: Einerseits müssen sie eine Kippbewegung ausführen, damit die in der Regel mit vertikaler Achse aus dem Formwerkzeug und aus der Vereinzelung kommenden Produkte nicht vertikal gestapelt werden müssen, sondern bevorzugt eher liegend als stehend. Andererseits wird in den meisten Fällen eine Lageänderung vorgesehen sein, bei welcher sich die Produkte ausgehend von der geodätischen Höhe des Index' nach unten verlagern. Die Erfindung hat erkannt, dass es mit unnötigem Aufwand und somit für unnötige Kosten auf Seiten des Käufers einer Thermoformanlage verbunden ist, für die Lageänderung einen elektromechanischen Antrieb vorzusehen. Stattdessen scheint es der Erfindung sinnvoller zu sein, die Schwerkraft zum Beschleunigen des Produkts nach unten zu nutzen. Die Produkte können dann mit ihrer eigenen Gewichtskraft die oft gewünschte Lageveränderung nach unten bewirken.

Der Vollständigkeit halber sei darauf hingewiesen, dass auch in einer Konstellation, in welcher der Schwerkraft des fallenden Produkts eine Bremskraft entgegengesetzt ist, so dass mitunter keine Geschwindigkeitssteigerung des Produkts auf dem Weg nach unten durch den Fallschacht beobachtbar ist, ebenfalls unter die hier vorgestellte Formulierung fallen kann. In der bevorzugten Ausführungsform jedoch erhöht das Produkt seine Geschwindigkeit auf dem Weg durch den Fallschacht zumindest über eine Teilstrecke des Fallschachts.

Wenn eine Fallbremse vorgesehen ist, können die fallenden Produkte seitlich und/oder an der Oberseite und/oder an der Unterseite, bevorzugt aber an mindestens zwei gegenüberliegenden Seiten, mittels Reibung gebremst werden. Dies kann zum einen für eine Lautstärkereduzierung während der Produktion sorgen, andererseits werden die Kanten der Produkte, auf welchen die Produkte unten aufschlagen, stärker geschont.

Eine geeignete Fallbremse kann beispielsweise eine Bürste sein.

Mit Blick auf das Anlagendesign wird vorgeschlagen, dass an den Fallschacht eine Stapelstrecke angeschlossen ist.

Die DE 42 44 089 A1 stapelt die Produkte direkt unterhalb des Ausdrückers, somit in vertikaler Richtung. Die weitere Handhabung der Produkte erfolgt dann ohne weiteres Stapeln. Vielmehr legt der Kippstapler den bereits erzeugten Stapel lediglich in einer geodätischen Höhe nach unten und gleichzeitig auf die Seite, und von dort erfolgt ein Weitertransport, aber kein weiteres Stapeln.

Bei der hier vorgestellten Erfindung erfolgt demgegenüber ein Stapeln bevorzugt auch nach dem Durchlauf der Produkte durch die Kippkante und den Fallschacht. Der zugrunde liegende Gedanke für diesen Aspekt liegt darin, dass zunächst entweder vollständig ungestapelte, einzelne Produkte oder aber vorgestapelte Produkte gekippt und durch den Fallschacht in ihrer Höhe nach unten verlegt werden. Unter "vorgestapelten" Produkten sei zu verstehen, dass zwar ein kleiner Stapel an Produkten hergestellt wird, dass dieser aber eine geringere Anzahl an gestapelten Produkten aufweist als letztlich im fertigen Stapel die Thermoformanlage verlassen, oder jedenfalls die Stapelstation in ihrem ersten Schritt verlassen. So sei insbesondere daran gedacht, nur ein, zwei oder drei Produkte in einem Vorstapel zu versehen, den Vorstapel dann zu kippen und durch den Fallschacht fallen zu lassen, woraufhin das Stapeln der kleineren Vorstapel zu einem größeren Stapel noch direkt dort in derselben Anlage passiert, aber mit liegenden Vorstapeln, also mit gekippten Vorstapeln. Dazu können die Vorstapel in ihrer gekippten Position einfach liegend ineinandergeschoben werden. Bevorzugt befindet sich die Stapelstrecke unterhalb der Fallschächte beginnend, so dass die Anlage sehr kurz bauen kann und bei idealer Ausgestaltung zusätzlich zu einem Stapelschieber, der die Stapelung der liegenden Produkte bewirkt, kein weiterer Antrieb in der liegenden Richtung erforderlich ist, bis entweder die letztendlichen Stapel oder zumindest eine weitere Stapelung von Vorstapelung erstellt sind.

Die erwähnte Stapelstrecke ist bevorzugt in Maschinenrichtung ansteigend geneigt, abfallend geneigt, oder horizontal, bevorzugt gemeinsam mit einem Ausschieber, besonders bevorzugt wahlweise je nach Produkt eingestellt.

Es kann eine Einstellbarkeit des Winkels vorgesehen sein.

Wenn die Stapelstrecke in Maschinenrichtung ansteigend geneigt ist, dann wirkt eine Komponente der Schwerkraft der gestapelten oder jedenfalls über die Vorstapelung hinausgehend gestapelten Produkte gegen die Maschinenrichtung. Ein Ausschieber kann dann die gegen die Ausschieberichtung wirkende Komponente der Schwerkraft dazu nutzen, eine Stapelung zu bewirken. Konkret muss der Ausschieber nur ein neues gekipptes und durch den Fallschacht bereitgestelltes Produkt, bevorzugt vorgestapelt, in Maschinenrichtung weiter fördern und dabei in den bereits erstellten Weiterstapel einschieben. Wegen der durch die Gewichtskraft gegen diese Richtung gerichtete Kraftkomponente des bereits Weitergestapelten muss Weitergestapelte entweder nicht oder nur wenig festgehalten werden. Dies ist unabhängig davon, ob der Ausschieber eher wie eine Vorschubstange geformt ist und direkt an die Produkte greift, beispielsweise in die Produkte greift, oder ob der Ausschieber beispielweise als Förderband ausgestaltet ist.

Bevorzugt erfolgt das Ausschieben in Maschinenrichtung mit der konkaven Seite voran. Der Durchlauf durch die Stapelstation ist dann besonders einfach gestaltbar: Die Produkte werden bevorzugt mit der konkaven Seite nach oben im Formwerkzeug erzeugt. Anschließend kann ein nicht durch die Patentansprüche beanspruchter Ausdrücker zum Vereinzeln die Produkte einfach nach unten aus dem Index ausdrücken. Sie liegen dann nach wie vor mit der konkaven Seite nach oben, können also, sofern dies gewünscht ist, einfach aufgrund der Schwerkraft Vorstapel bilden. Beim Kippen können die Produkte bevorzugt mit der konkaven Seite nach vorne gekippt werden. Hierzu müssen sie lediglich in Maschinenrichtung über die Kippkante transportiert werden. Anschließend kann der Ausschieber sie beispielsweise auf der konvexen Seite ergreifen und in Maschinenrichtung weiterschieben.

Bei einer solchen Konstellation kann besonders einfach auch eine Umkehrung der Liegerichtung der becherförmigen Produkte dadurch erzeugt werden, dass diese nach dem Ausdrücken aus dem Index nicht in Maschinenrichtung über eine Kippkante gefördert werden, sondern gegen die Maschinenrichtung über eine Kippkante in idealerweise dort vorgesehene Fallschächte. Sie liegen dann mit der konkaven Seite gegen die Maschinenrichtung, und ein Ausschieber kann beispielsweise in die konkave Seite hineingreifen.

Bevorzugt ist ein Transportmittel der vereinzelten, ausgedrückten Produkte so eingerichtet, dass es wahlweise entweder in eine erste oder in eine zweite Richtung fördern kann, bevorzugt in Maschinenrichtung oder gegen die Maschinenrichtung, wobei zwei Kippkanten mit jeweils zugehörigen Fallschächten vorgesehen sind. Eine dergestalt eingerichtete Stapelstation kann ohne jedwede Umrüstung verschiedene Produkte stapeln, wenn die Kippkanten oder zumindest die Fallschächte auf die verschiedenen Produkte eingerichtet sind. Es ergibt sich dann in einem Fall ein Stapel mit der konvexen Seite voran, im anderen Fall ein Stapel mit der konkaven Seite voran. Lediglich der Ausschieber muss gegebenenfalls in seiner Bewegung anders programmiert werden. Es ist jedoch keine mechanische Umrüstung erforderlich.

Der gleiche Vorteil ergibt sich, wenn mehrere Arten Fallschächte vorgesehen sind, und wenn der Weg der vereinzelten, bevorzugt vorgestapelten, Produkte beeinflusst werden kann, so dass diese entweder zu einem ersten oder zu einem zweiten oder zu einem weiteren Fallschacht oder Fallschachtmodul geleitet werden. Hierzu kann sich beispielsweise ein Fallschachtmodul an eine örtlich feststehende Kippkante bewegen, oder die Kippkante kann bewegt werden, beispielsweise durch ein Verschieben der Transportmittel, welche die ausgedrückten und vereinzelten Produkte aufnimmt und weitertransportiert, beispielsweise ein Transportband.

Der Ausschieber, der auch als Stapelschieber bezeichnet werden kann, schiebt die bevorzugt vorgestapelten Produkte aus dem Bereich der Fallschächte heraus und entweder in den finalen Stapel hinein oder in eine weitergestapelte Gestalt hinein.

Der Stapelschieber ist bevorzugt elektromotorisch angetrieben. Er kann eine Steuerung oder eine Regelung aufweisen. Generell sei im Rahmen der hier vorliegenden Patentanmeldung darauf hingewiesen, dass zur Vereinfachung der Lesbarkeit generell von einer "Steuerung" gesprochen werden soll. Der Begriff der Steuerung soll einerseits die Steuerung beinhalten, andererseits aber auch ausdrücklich die "Regelung" als Unterfall der Steuerung, sofern sich nicht im Einzelfall etwa ergibt, dass dort nur eine Steuerung gemeint sein soll, nicht aber eine Regelung. Bei einer Nennung einer "Steuerung" ohne weitere Spezifizierung sei jedoch davon ausgegangen, dass auch die Regelung mit ausdrücklich offenbart sein soll.

Es wird vorgeschlagen, dass die Stapelstrecke eine Ausschiebebremse aufweist, welche von einem Ausschieber in Richtung zum Stapeln geschobene Produkte an deren Rändern zu bremsen eingerichtet ist.

Eine solche Ausschiebbremse kann beispielsweise in einer geriffelten Seitenstruktur bestehen, oder es können Bürsten vorgesehen sein, oder es kann beispielsweise ein Luftdruck als Gegendruck aufgebaut worden sein, beispielweise mit Druckluftdüsen. Prinzipiell kommen sämtliche Mittel in Betracht, welche in der Stapelstrecke eine gezielte Kraft auf die Ränder der zum Stapeln geschobenen Produkte gegen die Schieberichtung ausüben.

Hinsichtlich des Einlaufs in die Stapelstation kann ein nicht durch die Patentansprüche beanspruchter Ausdrücker vorgesehen sein, welcher dazu eingerichtet ist, die Produkte aus dem Index unmittelbar auf die Kippkante auszudrücken. Bei einer solchen Ausgestaltung der Anlage beziehungsweise zumindest der Stapelstation entfällt ein weiteres Fördermittel, welches zunächst die ausgedrückten Produkte aufnimmt und dann zur Kippkante transportiert.

Nicht beansprucht ist eine Stapelstation für eine Thermoformanlage, eingerichtet zum Stapeln einer Vielzahl becherförmiger Produkte aus einem Index zu einem Stapel mit einer Stapelrichtung, wobei eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zu einer Maschinenrichtung angeordnet sind, wobei die Stapelstation eine Vorstapeleinrichtung aufweist, welche aufwärts der Kippeinrichtungen liegt, so dass die Stapelstation dazu eingerichtet ist, mehrere Produkte einer Spalte gleichzeitig als Vorstapel zu kippen, wobei sich die Stapelstation dadurch kennzeichnet, dass sie dazu eingerichtet ist, die gekippten Vorstapel jeder Spalte in Maschinenrichtung unmittelbar in einen jeweils zugehörigen aus der Stapelstation abzutransportierenden Stapel auszuschieben.

Diese Ausführungsform spart ebenfalls gegenüber der DE 42 44 089 A1 eine vollständige Maschineneinheit ein: Nämlich den Querförderer, der sich in der Druckschrift anschließend an den Ausschieber anschließt und die einzelnen Vorstapel ohne weiteres Ineinanderstapeln zunächst aufnimmt, dann querfördert und erst anschließend aus der Maschine ausgibt, wobei nicht einmal eine endgültige Stapelung der Vorstapel erfolgt. Vielmehr werden in der Druckschrift die zunächst mittels des Ausdrückers hergestellten Produktstapel als endgültige Stapel ausgegeben.

Zum Ausschieben der gekippten vorgestapelten Produkte in einen Stapel ist ein Ausschieber vorgesehen, der die Produkte in einem Stapelrhythmus in der Stapelrichtung in den Stapel zu schieben eingerichtet ist.

Es sei ausdrücklich betont, dass der Stapelrhythmus nicht unbedingt dem Kipprhythmus entsprechen muss, bevorzugt aber auf dem Kipprhythmus abgestimmt ist. Im Idealfall ist ein Ausschieberhythmus identisch mit dem Kipprhythmus. Dies bedeutet nichts anderes, als dass jedes Mal nach dem Kippen eines Produkts beziehungsweise einer Zeile von Produkten der Ausschieber eine Ausschiebbewegung der gekippten Produkte oder Vorstapel ausführt.

Hierbei ist jedoch nicht jedes Ausschieben gleichzeitig ein Stapeln, sprich das endgültige Herstellen eines dann abzutransportierenden Stapels, sondern ist der Stapelrhythmus niedriger als der Ausschieberhythmus. Bei einer solchen Abstimmung der verschiedenen Rhythmen aufeinander kann beispielsweise nach jedem Kippen und Fallen von Produkten oder Vorstapeln durch den Fallschacht in den Wirkbereich des Ausschiebers auf der Stapelstrecke ein Vorschub des Ausschiebers erfolgen, wobei das gerade herabgefallene Produkt beziehungsweise der gerade herabgefallene Vorstapel weiter zu einem größeren Vorstapel vorgestapelt wird, nämlich durch Ineinanderschieben der verschiedenen Produkte beziehungsweise Vorstapel in der Stapelstrecke. Nach n Takten ist entweder der Stapel so groß geworden, dass er automatisch von einem Weitertransportmechanismus ergriffen wird, ober der Ausschieber führt einen Stapelhub und somit einen Ausschiebhub durch, oder ein anderes Transportmittel führt einen Ausschub des somit endgültig hergestellten Stapels durch.

Bevorzugt ist der Ausschieber dazu eingerichtet, mehrere Vorstapel gleichzeitig in den Stapel hineinzuschieben.

Die aus einer Spalte zu erzeugenden vorgesehenen Stapel sind bevorzugt gefluchtet mit der zugehörigen Spalte des Index'.

Bei einer solchen Gestaltung ist kein Quertransport erforderlich, sondern die einzelnen Produkte der Spalten des Index' können in Maschinenrichtung unbeeinträchtigt vorwärts laufen.

Ein Ausschieber ist wahlweise eine von zwei Schubstufen auszuführen eingerichtet, wobei eine erste Schubstufe einen kürzeren Vorschub aufweist und eine zweite Schubstufe einen längeren Vorschub aufweist, wobei die erste Schubstufe zum Stapeln von Vorstapeln eingerichtet ist, und wobei die zweite Schubstufe zum Ausschieben der Produkte zum Weitertransportieren eingerichtet ist.

Es sei daraufhingewiesen, dass auch mehr als zwei Schubstufen vorgesehen sein können.

Nicht beansprucht ist eine Stapelstation für eine Thermoformanlage, eingerichtet zum Stapeln einer Vielzahl becherförmiger Produkte aus einem Index zu einem Stapel mit einer Stapelrichtung, wobei eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zu einer Maschinenrichtung angeordnet sind, wobei die Stapelstation eine Ausdrückeinrichtung aufweist, welche aus dem Index Einzelnutzen ausdrückt und die ausgedrückten Einzelnutzen auf eine Vorstapelfördereinrichtung bringt, welche die Einzelnutzen mit einer Vorstapelfördertaktung zur Kippeinrichtung führt, wobei sich die Stapelstation dadurch kennzeichnet, dass die Vorstapelfördertaktung nach jedem Ausdrücken einen Vorschub in die Kippeinrichtung durchführt.

Begrifflich sei hierzu erläutert, dass die "Vorstapelfördereinrichtung" bereits aus der DE 42 44 089 A1 bekannt ist: Denn auch in der dortigen Druckschrift werden aus einem (nicht dargestellten) Ausdrücker die Produkte aus dem Index in einzelne Stapel hinein ausgedrückt. In dieser Form erreichen die schon erstellten Stapel die eigentliche Stapelstation, also denjenigen Zustand, welcher in der Druckschrift beispielsweise in Figur 1 gezeigt ist. Das dort vorgestellte Förderband 3 ist also nicht dasjenige, mit welchem die ursprünglichen Kunststofffolien oder Kunststoffplatten transportiert wurden. Vielmehr spielen sich der Transport der Kunststofflage und das Erzeugen der becherförmigen Produkte mittels eines Kavitäten aufweisenden Werkzeugs oberhalb und vor der dargestellten Situation in der Offenlegungsschrift ab. Das dargestellte Transportband 3 ist also eine "Vorstapelfördereinrichtung", wenn anschließend die dort offenbarten Stapel noch zu größeren Stapeleinheiten gestapelt werden.

In der DE 42 44 089 A1 ist die Vorstapelfördertaktung zur Kippeinrichtung so eingestellt, dass zunächst sämtliche Stapel vollständig vom Ausdrücker geführt werden. Dann muss der Produktionsprozess im Formwerkzeug angehalten werden, und die einzelnen Zeilen werden nacheinander in die Kippeinrichtung vorgeschoben, konkret in den Kippstapler 6. Dort erfolgt zeilenweise das Kippen und anschließend ein Vorschub auf den Querförderer 4.

Diese führt nach jedem Ausdrücken mehrerer Zeilen gleichzeitig einen Vorschub der Vorstapelfördereinrichtung zur Kippkante in die Kippeinrichtung durch. Zu jedem Zeitpunkt finden sich daher in den verschiedenen Zeilen in der Vorstapelfördereinrichtung unterschiedliche Anzahlen von Produkten in den Vorstapeln wieder. Dennoch wird bei jedem Vorschub in die Kippeinrichtung hinein ein Vorstapel mit einer identischen Anzahl Produkte gekippt.

Bevorzugt bezweckt der Vorschub eine geringere Produktzahl als eine Zeilenzahl des Index' beträgt. Dies ist der konstruktive Weg dafür, dass sich Vorstapel aufbauen, auch wenn bei jedem Ausdrücktakt ein Vorschub der Vorstapelfördereinrichtung abspielt.

Nicht beansprucht ist eine Stapelstation für eine Thermoformanlage, eingerichtet zum Stapeln einer Vielzahl becherförmiger Produkte aus einem Index zu einem Stapel mit einer Stapelrichtung, wobei eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index die Produkte in Spalten und Zeilen vorliegen, wobei die Spalten längs zu einer Maschinenrichtung angeordnet sind und die Zeilen quer zur Maschinenrichtung angeordnet sind, wobei die Stapelstation eine Ausdrückeinrichtung aufweist, welche aus dem Index Einzelnutzen ausdrückt, und wobei die Ausdrückeinrichtung bevorzugt die ausgedrückten Einzelnutzen auf eine Vorstapelfördereinrichtung bringt, welche die Einzelnutzen mit einer Vorstapelfördertaktung zur Kippeinrichtung führt, von wo aus die Einzelnutzen als Vorstapel in einen Stapel geschoben werden, wobei die bevorzugt angegebene Merkmalskombination dann greift, wenn aus dem Index direkt auf die Kippkante ausgedrückt wird, wobei sich die Stapelstation dadurch kennzeichnet, dass sie dazu eingerichtet ist, zusätzlich zum Schieben der Einzelnutzen in den Stapel einen alternativen Transportweg anzusteuern, welcher einen Einzelnutzen einem Ausschuss zuführt.

Es ist dadurch möglich, im Rahmen der Qualitätskontrolle oder auch beispielsweise beim Anfahren der Anlage oder beispielsweise beim Anfahren der Heizstation einzelne Nutzen einem Ausschuss zuzuführen, oder beispielsweise jeweils zumindest eine Zeile von Nutzen dem Ausschuss zuzuführen.

Die Steuerung, ob wahlweise der Einzelnutzen in den Stapel geschoben wird oder ob er dem Ausschuss zugeführt wird, kann entweder manuell vorgegeben werden, oder es kann eine Messeinrichtung vorgesehen sein, welche die Qualität des Produkts zu beurteilen eingerichtet ist und beim Unterschreiten oder Überschreiten bestimmter Grenzwerte automatisch die Zuführung zum Ausschuss veranlasst.

Alle Produkte einer Zeile werden dem Ausschuss zugeführt, wenn mindestens eines der Produkte der Zeile dem Ausschuss zugeführt werden soll. Dies ermöglicht es, die Stapeltaktung ansonsten identisch beizubehalten. Außerdem ist mit gewisser Wahrscheinlichkeit davon auszugehen, dass auch die benachbarten Produkte eines die Qualitätskontrolle nicht bestehenden Produkts nicht ideal sein werden.

Um den alternativen Transportweg anzusteuern, kann beispielsweise die Vorstapelfördereinrichtung dazu eingerichtet sein, wahlweise alternativ zu einem Vorschub zur Kippeinrichtung ein Transportschub in Gegenrichtung auszuführen.

Idealerweise ist aufwärts der Vorstapelfördereinrichtungsrichtung ein Ausschusssammler angeordnet, beispielweise ein einfacher Korb oder Eimer für den Ausschuss. Unter der Richtung "aufwärts" ist hier gemeint, dass entgegen der eigentlichen Weiterförderrichtung in Richtung zum Stapel gefördert werden soll, also gewissermaßen stromaufwärts in Bezug auf die Maschinenrichtung, wenn die Maschinenrichtung stetig zum Stapel führt.

In einer alternativen oder kumulativen Ausführungsform kann der Fallschacht einen in den Fallweg stellbaren Umlenker aufweisen. Auch dadurch lassen sich leicht ausschüssige Produkte aus dem Weg zum Stapel entfernen.

Nach einem weiteren Aspekt der Erfindung löst die gestellte Aufgabe ein Verfahren zum Herstellen von becherförmigen Produkten in einer voran beschriebenen erfindungsgemäßen Thermoformanlage, wobei zunächst aus dem Index Produkte mittels einer Ausdrückeinrichtung ausgedrückt werden, gegebenenfalls vorgestapelt werden, und nach einem Kippen über die Kippkante in den Fallschacht hinein zu einem Stapel mittels eines Ausschiebers liegend gestapelt werden.

Es sei ausdrücklich erwähnt, dass bei dem vorteilhaften Verfahren sämtliche vorstehend genannten Teilaspekte und einzelnen Merkmale ebenfalls zur Anwendung gebracht werden können.

Es versteht sich, dass eine Thermoformanlage unmittelbar von den Vorteilen der Stapelstation und/oder des Verfahrens profitiert.

Unabhängig von der konkreten Gestaltung der weiteren Anlage wird vorgeschlagen, dass eine Einstelleinrichtung für einen Kipppunkt der Produkte an der Kippkante vorgesehen ist.

Je nach den herzustellenden Produkten, der Kunststofftemperatur beim Erreichen der Kippkante oder weiteren oder anderen Parametern kann es sinnvoll sein, den Kipppunkt zu verstellen. Insbesondere sei zum konstruktiven Gestalten der Einstelleinrichtung gedacht, dass ein zur Kippkante führendes Förderband in seiner Neigung verstellbar ist, dass dieses Förderband zur Kippkante oder zum Fallschacht in seinem Abstand verstellbar ist und/oder dass der Fallschacht in seiner Neigung einstellbar ist.

Die Erfindung wird nachstehend anhand von Ausführungsbeispielen unter Bezugnahme auf die Zeichnung näher erläutert. Dort zeigen
Figur 1 schematisch in einer seitlichen Ansicht eine Stapelstation einer Thermoformanlage, mit einem Ausdrücker, einer Vielzahl Produkte, einer Folie, einem Vorstapel-Förderband, einem Ausschieber, einer Kippkante, einem Fallschacht, einem Ausschieber und einem Stapelförderband,
Figur 2 die schematische Ansicht aus Figur 1 nach einem ersten Ausdrücktakt,
Figur 3 die Ansicht aus den Figuren 1 und 2 während eines zweiten Ausdrücktaktes,
Figur 4 die Ansicht aus den Figuren 1-3 nach dem zweiten Ausdrücktakt,
Figur 5 die Ansicht aus den Figuren 1-4 während eines dritten Ausdrücktaktes,
Figur 6 die Ansicht aus den Figuren 1-5 nach dem dritten Ausdrücktakt,
Figur 7 schematisch eine räumliche Ansicht auf einen Teil der Stapelstation sowie
Figur 8 eine beispielhafte Ausgestaltung eines Moduls mit einer Vielzahl Fallschächte.

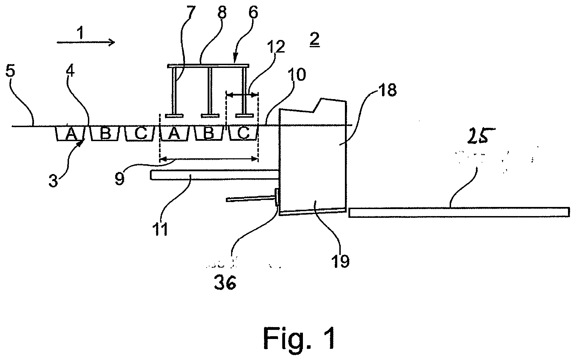

In der schematisch dargestellten Thermoformanlage läuft ein besonders bevorzugtes erfindungsgemäßes Verfahren wie folgt:
Ein Formwerkzeug (nicht dargestellt) ist in Maschinenrichtung 1 oberhalb der Stapelstation 2 angeordnet, bei einer einfachen linearen Aufbauweise einer Thermoformanlage also links von der in Figur 1 dargestellten Länge.

Das Formwerkzeug ist ein Kavitätenwerkzeug, welches dazu eingerichtet ist, in Maschinenrichtung 1 drei Zeilen von Produkten in einem Index 3 herzustellen, somit ein Produkt C einer ersten Zeile, ein Produkt B einer zweiten Zeile und ein Produkt A einer dritten Zeile. Die Anzahl der Spalten des Index' ist beliebig. Der Einfachheit halber wird nachstehend, da es sich um eine Seitenansicht handelt, immer nur von einem Produkt gesprochen, nicht aber von einer ganzen Zeile oder mehreren Produkten, denn in einer Seitenansicht lässt sich immer nur das im hier vorliegenden Beispiel ganz rechts liegende Produkt einer Zeile des Index' sichtbar darstellen.

Die hergestellten Produkte A, B und C sind miteinander über kleine Kerben 4 (exemplarisch beziffert) verbunden, so dass sie nach der Thermoformstation noch im Verbund mit einer Folie 5 durch die Anlage transportiert werden können.

Durch das Verbundensein auch mehrerer Indizes in Maschinenrichtung laufen die Indizes miteinander verbunden unter einen Ausdrücker 6. Der Ausdrücker 6 hat für jede Zeile im Index, hier also sowohl für das Produkt A, das Produkt B und das Produkt C, jeweils einen Ausdrückarm 7 (exemplarisch beziffert). Die drei Ausdrückarme 7 sind miteinander über eine Ausdrückerbrücke 8 verbunden.

Die Maschine taktet ihren Vorschub über die Länge 9 eines Nutzens, also über die Länge der mit einem Hub und einem Takt im Formwerkzeug erzeugten Produkte eines Index'.

Sobald die Folie 5 mit dem Nutzen 9, somit den drei Zeilen der Produkte A, B und C, im Ausdrücker 6 angekommen ist und dort angehalten hat, fährt der Ausdrücker 6 mit seinen Ausdrückarmen 7 nach unten. Dabei greift jeder der Ausdrückarme 7 in sein ihm zugeordnetes Produkt A, B oder C hinein. Die Kerben 4 zerreißen bei der dadurch in sie induzierten Zugkraft, und die Produkte A, B, C lösen sich aus der Folie 5 als Einzelnutzen heraus. Es verbleibt nur ein Restfoliengitter 10 abwärts des Ausdrückers 6.

Unter der Ebene der Folie 5 und des Restfoliengitters 10 befindet sich auf Höhe des Ausdrückers 6 ein Vorstapelförderband 11.

Der Hub des Ausdrückers 6 ist soweit eingestellt, dass die Produkte A, B, C in derselben Konstellation auf das Vorstapelförderband ausgedrückt werden und dort zum Liegen kommen wie die Produkte zueinander innerhalb des Index' 3 gewesen sind.

Sind die drei Produkte A, B, C auf dem Vorstapelförderband 11 angekommen, fährt dieses in Maschinenrichtung 1 um einen Takt vor.

Während jedoch die Folie 5 mit jedem Takt einen Vorschub in Höhe eines gesamten Nutzens hat, im hier gezeigten Beispiel also über die Länge 9 des Nutzens mit drei Produkten beziehungsweise Kavitäten im Formwerkzeug, taktet das Vorstapelförderband 11 zeitgleich, führt aber nur einen Vorschub in Maschinenrichtung 1 um eine Länge 12 einer Kavität durch, mithin also jeweils nur eines Produkts A, B, C.

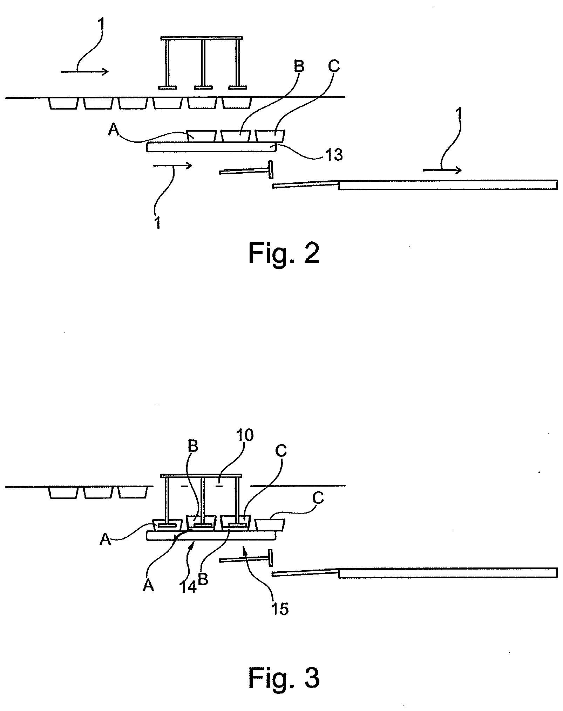

Der Ausdrücker 6 fährt wieder zurück nach oben, die Folie 5 fährt um die Länge 9 eines Nutzens vorwärts, und ein Takt ist beendet (dargestellt in Figur 2).

In diesem Zustand befindet sich das vorderste becherförmige Produkt C noch auf dem um einen Takt einer Länge 12 einer Kavität vorgefahrenen Vorstapelförderband. Das Vorstapelförderband ist so positioniert, dass abwärts, bezogen auf die Maschinenrichtung 1, der ausgedrückten Produkte A, B, C noch etwas mehr Platz ist als die Länge 12 einer Kavität beträgt, so dass das vorderste Produkt C noch auf dem Vorstapelförderband 11 sicher liegen kann, weil sein Schwerpunkt sich noch aufwärts, bezogen auf die Maschinenrichtung 1, einer Kippkante 13 befindet.

Das Vorstapelförderband 11 ist sowohl in Maschinenrichtung 1 als auch in seiner Neigung gegenüber der Horizontalen verstellbar. Dadurch lässt sich exakt einstellen, wie weit ein vorderstes Produkt C nach einem Taktvorschub noch auf dem Vorstapelförderband 11 liegt, oder ob es beispielsweise bereits über die Kippkante 13 heruntergefallen ist.

Im Beginn des zweiten Taktes (dargestellt in Figur 3) verführt der Ausdrücker 6 wiederum einen Ausdrückhub und drückt drei identische Produkte A, B, C aus einem identischen Index aus der Folie 5, konkret aus dem dadurch entstehenden Restfoliengitter 10.

Der nicht durch die Patentansprüche beanspruchte Ausdrücker 6 ist so gesteuert, dass er nicht eine zwingende Kraft in vertikaler Richtung nach unten bis zum Vorstapelförderband 11 ausübt. Dies hat seinen Grund darin, dass für die beiden vorderen Produkte B, C des Index' 3 bereits jeweils ein Produkt dort steht, wo der Ausdrücker 6 die beiden vorderen Produkte B, C aus der Folie 5 herausdrücken würde, nämlich die zwei hinteren Produkte A, B. Dies führt dazu, dass das hinterste Produkt A in Folge des Vorschubtaktes des Vorstapelförderbandes 11 direkt auf das Vorstapelförderband 11 ausgedrückt, dass aber das mittlere Produkt B in ein unter ihm befindliches, vorwärts getaktetes ehemals hinteres Produkt A eingerückt wird; ebenso wird das jeweils vordere Produkt C aus der der Folie 5 nach unten in das ehemals mittlere Produkt B nach dessen Verrücken gedrückt. Auf dem Vorstapelförderband ergeben sich somit ein einzelnes Produkt, gebildet aus dem jeweils hintersten Produkt A, sowie zwei erste Vorstapel 14, 15 und in der Anlaufphase der Anlage noch abwärts davon ein einzelnes Produkt, nämlich das zuallererst vorlaufende Produkt C (bis hierhin dargestellt in Figur 3).

Zum Vollenden des Taktes fährt der Ausdrücker 6 wieder nach oben, und das Vorstapelförderband 11 taktet wieder einen Vorschub um die Länge 12 einer Kavität in Maschinenrichtung 1.

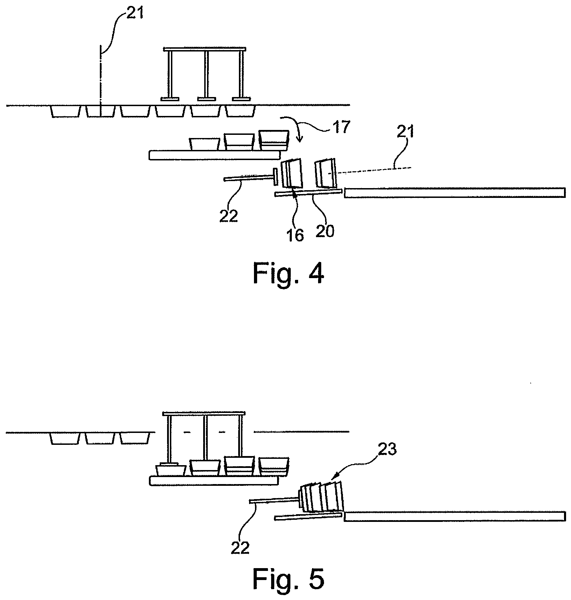

Der jeweils vorderste Vorstapel 16 (dargestellt in Figur 4, wobei allerdings ein längerer Maschinenvorlauf bereits vorausgesetzt wurde in der zeichnerischen Darstellung) wird dabei vom Vorstapelförderband 11 über die Kippkante 13 hinaus in Maschinenrichtung gefördert. In Folge der Gewichtskraft des jeweils vordersten Vorstapels kippt dieser in eine Kipprichtung 17 (angedeutet in Figur 4) in einen Fallschacht 18 hinein. Wände 19 (exemplarisch beziffert) des Fallschachts 18 stabilisieren die Produkte im jeweils vordersten Vorstapel währenddessen Kipp- und Fallbewegung im Fallschacht 18 nach unten, bis der fallende Vorstapel auf einem Stapelboden 20 zum Liegen kommt. Die Produkte A, B, C befinden sich auf dem Stapelboden 20 somit in gekippter Richtung, mithin mit einer Produktachse 21 nun eher flachliegend oder sogar horizontal ausgerichtet.

Ein Ausschieber 22 ist auf dieser dritten Ebene des Produkttransports vorgesehen. Er kann parallel zum Stapelboden 20 vorgeschoben werden, und zwar in Maschinenrichtung. Auf diese Weise kann er einen ersten Vorstapel in einen zweiten Vorstapel hineinschieben, so dass sich entweder schon ein fertiger Stapel oder ein erweiterter Vorstapel 23 ergibt (dargestellt in Figur 5).

Auf dem Stapelboden 20 kann eine beliebige Anzahl von Vorstapeln gesammelt werden, bis sich letztendlich ein aus der Stapelstation abzutransportierender Stapel 24 ergibt. Der fertige Stapel 24 wird dann vom Ausschieber 22 auf ein Abtransportförderband 25 geschoben, so dass die fertigen Stapel 24 in Maschinenrichtung 1 aus der Stapelstation transportiert werden können.

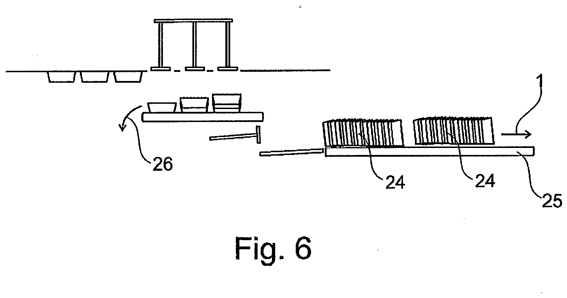

Wird während der Produktion festgestellt, dass ein in einem Index 3 liegendes Produkt Qualitätsanforderungen nicht erfüllt, so wird entweder beispielsweise im Fallschacht 18 eine Umlenkung aktiviert, und die Zeile an Produkten wird ausgeschleust, wobei bevorzugt in diesem Fall das Vorstapelförderband 11 nicht im Takt seinen Vorschub ausführt; oder das Vorstapelförderband 11 wird gegen die Maschinenrichtung 1 aktiviert, so dass in einer Auswurfrichtung 26 (angedeutet in Figur 6) ein Produktausschuss entnommen werden kann.

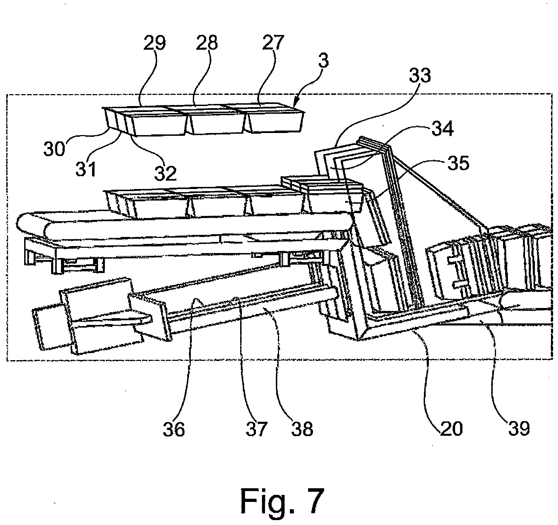

Es wurde bereits erläutert, dass der vorstehend beschriebene, besonders bevorzugte erfindungsgemäße Verfahrensablauf (dargestellt in den Figuren 1-6) bevorzugt für alle Produkte einer Zeile 27, 28, 29 eines Index' 3 gleichzeitig erfolgt, so dass sich bei beispielsweise drei Spalten 30, 31, 32 einer Zeile 27, 28, 29 drei Fallschächte 33, 34, 35 anbieten, damit die Produkte jeder Spalte 30, 31, 32 voneinander separiert in jeweils einen Fallschacht 33, 34, 35 hineinfallen (dargestellt in Figur 7), wobei dann bevorzugt auch ein Ausschieber mit drei Ausschiebefingern 36, 37, 38 vorgesehen ist, damit jeder Ausschiebefinger 36, 37, 38 in genau einen Fallschacht 33, 34, 35 hineinfahren kann und die Produkte dort auf dem Stapelboden 20 in Maschinenrichtung weitertransportieren kann.

Bevorzugt lässt sich (wie dargestellt in Figur 7) die Gesamtheit der Fallschächte 33, 34, 35 gemeinsam mit dem Stapelboden 20 und den Ausschiebefingern 36, 37, 38 gegenüber den Horizontalen in einen Winkel 39 neigen. Es muss allerdings keine Neigbarkeit vorhanden sein, und/oder der Winkel 39 kann Null betragen oder er kann negativ sein, also mit einer abfallenden Strecke.

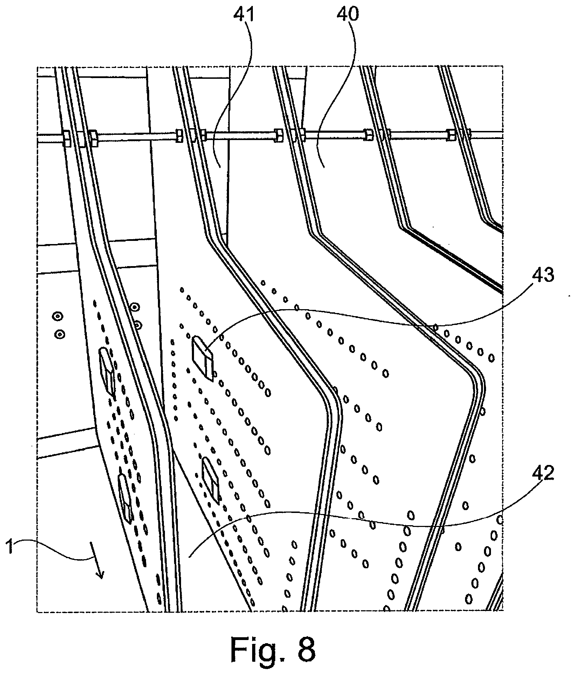

Die einzelnen Fallschächte sind bevorzugt mit blechernen Seitenwänden 40 (exemplarisch beziffert, vgl. Figur 8) versehen.

Abwärts einer Kippkante 41 können die Produkte so zwischen den Seitenwänden 40 hindurch sicher geführt nach unten fallen, auf den Stapelboden 42. Dort sichern gefederte und geriffelte Blättchen 43, welche an den Seitenwänden 40 befestigt sind, bevorzugt in verschiedenen Höhen, die Produkte gegen ein unbeabsichtigtes Kippen nach vorne in Maschinenrichtung 1. Die Blättchen 43 sind bevorzugt mittels rastermäßig angeordneter Haltevorrichtungen wie beispielsweise den hier dargestellten Löchern in ihrer Position in Maschinenrichtung 1 verschieblich fixierbar, so dass sie für verschiedene Längen von Stapeln jeweils gezielt angeordnet werden können.

Die Seitenwände 40 der Fallschächte sind bevorzugt miteinander verbunden, beispielsweise durch eine durchgehende Schraubverbindung, damit sämtliche Fallschächte als ein Modul ausgetauscht werden können.

### Bezugszeichenliste

- 1: Maschinenrichtung
- 2: Stapelstation
- 3: Index
- 4: Kerbe
- 5: Folie
- 6: Ausdrücker
- 7: Ausdrückarm
- 8: Ausdrückerbrücke
- 9: Länge eines Nutzens
- 10: Restfoliengitter
- 11: Vorstapelförderband
- 12: Länge einer Kavität
- 13: Kippkante
- 14, 15: erste Vorstapel
- 16: vorderster Vorstapel
- 17: Kipprichtung
- 18: Fallschacht
- 19: Wände
- 20: Stapelboden
- 21: Produktachse
- 22: Ausschieber
- 23: erweiterter Vorstapel
- 24: Stapel
- 25: Abtransportförderband
- 26: Auswurfrichtung
- 27, 28, 29: Zeilen
- 30, 31 , 32: Spalten
- 33, 34, 35: Fallschächte
- 36, 37, 38: Ausschiebefinger
- 39: Winkel
- 40: Seitenwand
- 41: Kippkante
- 42: Stapelboden
- 43: Blättchen

## Patentansprüche

1. Thermoformanlage mit einer Stapelstation (2), eingerichtet zum Stapeln einer Vielzahl becherförmiger Produkte aus einem Index (3) zu einem Stapel (24) mit einer Stapelrichtung, wobei an der Stapelstation (2) eine Kippeinrichtung vorgesehen ist, welche die becherförmigen Produkte aus einer Ausrichtung abweichend von der Stapelrichtung zum Stapeln in die Ausrichtung der Stapelrichtung zu kippen eingerichtet ist, wobei im Index (3) die Produkte in Spalten (30, 31, 32) und Zeilen (27, 28, 29) vorliegen, wobei die Spalten (30, 31, 32) längs zu einer Ma**schinenrichtung (1) angeordnet sind und die Zeilen (27, 28, 29) quer zur Maschinenrichtung (1) angeordnet sind,** wobei die Stapelstation (2) eine Vorstapeleinrichtung aufweist, welche aufwärts der Kippeinrichtung liegt, sodass die Stapelstation (2) dazu eingerichtet ist, mehrere Produkte einer Spalte (30, 31, 32) gleichzeitig als Vorstapel zu kippen,wobei die Stapelstation (2) dazu eingerichtet ist, die gekippten Vorstapel jeder Spalte (30, 31, 32) in Maschinenrichtung (1) unmittelbar in einen jeweils zugehörigen aus der Stapelstation (2) abzutransportierenden Stapel (24) auszuschieben,
***dadurch gekennzeichnet, dass***
die Kippeinrichtung der Stapelstation eine Kippkante (13) mit einem daran anschließenden Fallschacht (18, 33, 34, 35) für die Produkte aufweist,
wobei bevorzugt für jede Spalte (30, 31, 32) Produkte ein Fallschacht (18, 33, 34, 35) vorgesehen ist,
wobei der Fallschacht (18, 33, 34, 35) der Stapelstation dazu eingerichtet ist, die Produkte von der Schwerkraft beschleunigt den Fallschacht (18, 33, 34, 35) entlang fallen zu lassen.

2. Thermoformanlage mit Stapelstation (2) nach Anspruch 1, ***dadurch gekennzeichnet, dass*** die Fallschächte (18, 33, 34, 35) in einem auswechselbaren Modul vorgesehen sind.

3. Thermoformanlage mit Stapelstation (2) nach einem der vorstehenden Ansprüche, ***dadurch gekennzeichnet, dass*** eine Fallbremse vorgesehen ist, um die fallenden Produkte seitlich mittels Reibung zu bremsen.

4. Thermoformanlage mit Stapelstation (2) nach einem der vorstehenden Ansprüche, ***dadurch gekennzeichnet, dass*** an den Fallschacht (18, 33, 34, 35) eine Stapelstrecke angeschlossen ist.

5. Thermoformanlage mit Stapelstation (2) nach Anspruch 4, ***dadurch gekennzeichnet, dass*** die Stapelstrecke in Maschinenrichtung (1) ansteigend geneigt ist, bevorzugt gemeinsam mit einem Ausschieber (22).

6. Thermoformanlage mit Stapelstation nach Anspruch 5, ***dadurch gekennzeichnet, dass*** die Stapelstrecke eine Ausschiebbremse aufweist, welche von einem Ausschieber (22) in Richtung zum Stapeln geschobene Produkte an deren Rändern zu bremsen eingerichtet ist.

7. Thermoformanlage mit Stapelstation (2) nach Anspruch 1, ***dadurch gekennzeichnet, dass*** zum Ausschieben der gekippten vorgestapelten Produkte in einen Stapel (24) in der Stapelstation ein Ausschieber (22) vorgesehen ist, der die Produkte in einem Stapelrhythmus in der Stapelrichtung in den Stapel (24) zu schieben eingerichtet ist, wobei bevorzugt der Ausschieber (22) mehrere Vorstapel gleichzeitig in den Stapel (22) hinein zu schieben eingerichtet ist.

8. Thermoformanlage mit Stapelstation (2) nach Anspruch 7, ***dadurch gekennzeichnet,* dass** die aus einer Spalte (30, 31, 32) zu erzeugen vorgesehenen Stapel (24) gefluchtet mit der zugehörigen Spalte (30, 31, 32) des Index' (3) sind.

9. Thermoformanlage mit Stapelstation (2) nach einem der Ansprüche 7 oder 8, ***dadurch gekennzeichnet, dass*** der Ausschieber (22) wahlweise eine von zwei Schubstufen auszuführen eingerichtet ist, wobei eine erste Schubstufe einen kürzeren Vorschub aufweist und eine zweite Schubstufe einen längeren Vorschub aufweist, wobei die erste Schubstufe zum Stapeln von Vorstapeln eingerichtet ist, und wobei die zweite Schubstufe zum Ausschieben der Produkte zum Weitertransportieren eingerichtet ist.

10. Thermoformanlage mit Stapelstation (2) nach einem der vorstehenden Ansprüche, wobei die Stapelstation (2) eine Ausdrückeinrichtung aufweist, welche aus dem Index (3) Einzelnutzen ausdrückt und die ausgedrückten Einzelnutzen auf eine Vorstapelfördereinrichtung bringt, welche die Einzelnutzen mit einer Vorstapelfördertaktung zur Kippeinrichtung führt, ***dadurch gekennzeichnet, dass*** die Vorstapelfördertaktung nach jedem Ausdrücken einen Vorschub in die Kippeinrichtung durchführt, wobei bevorzugt der Vorschub eine geringere Produktzahl umfasst als eine Zeilenzahl des Index' (3) beträgt.

11. Thermoformanlage mit Stapelstation (2) nach einem der vorstehenden Ansprüche, wobei die Stapelstation (2) eine Ausdrückeinrichtung aufweist, welche aus dem Index (3) Einzelnutzen ausdrückt, wobei die Ausdrückeinrichtung bevorzugt die ausgedrückten Einzelnutzen auf eine Vorstapelfördereinrichtung bringt, welche die Einzelnutzen mit einer Vorstapelfördertaktung zur Kippeinrichtung führt, von wo aus die Einzelnutzen als Vorstapel in einen Stapel (24) geschoben werden, ***dadurch gekennzeichnet, dass*** die Stapelstation (2) dazu eingerichtet ist, zusätzlich zum Schieben der Einzelnutzen in den Stapel (24) einen alternativen Transportweg anzusteuern, welcher einen Einzelnutzen einem Ausschuss zuführt, wobei bevorzugt die Vorstapelfördereinrichtung dazu eingerichtet ist, wahlweise alternativ zu einem Vorschub zur Kippeinrichtung einen Transportschub in Gegenrichtung auszuführen und/oder aufwärts der Vorstapelfördereinrichtung ein Ausschusssammler angeordnet ist und/oder der Fallschacht einen in den Fallweg stellbaren Umlenker aufweist.

12. Thermoformanlage mit Stapelstation (2) nach einem der vorstehenden Ansprüche, ***dadurch gekennzeichnet, dass*** eine Einstelleinrichtung für einen Kipppunkt der Produkte an der Kippkante (13) vorgesehen ist.

13. Verfahren zum Herstellen von becherförmigen Produkten in einer Thermoformanlage spruch 1, wobei zunächst aus dem Index (3) Produkte mittels einer Ausdrückeinrichtung ausgedrückt werden, vorgestapelt werden, nach einem Kippen über die Kippkante (13) in den Fallschacht (18, 33, 34, 35) hineinfallen und zu einem Stapel (24) mittels eines Ausschiebers (22) liegend gestapelt werden.

## Claims

1. Thermoforming plant with a stacking station (2), adapted for stacking a plurality of cup-shaped products from an index (3) to form a stack (24) with a stacking device; a tipping device being provided at the stacking station (2), which is adapted to tip the cup-shaped products from an orientation differing from the stacking direction into the orientation of the stacking direction for stacking; the products in the index (3) being arranged in columns (30, 31, 32) and rows (27, 28, 29), the columns (30, 31, 32) being arranged longitudinally to a machine direction (1) and the rows (27, 28, 29) transversely to the machine direction; the stacking station (2) having a pre-stacking unit arranged upstream of the tipping device so that the stacking station (2) is adapted to tip several products of a column (30, 31, 32) simultaneously as a pre-stack; the stacking station (2) being adapted to push the tipped pre-stacks of each column (30, 31, 32) directly into a respective corresponding stack (24) to be transported away from the stacking station (2) in the machine direction (1),
***characterized in that***
the tipping device of the stacking station has a tipping edge (13) with an adjacent drop shaft (18, 33, 34, 35) for the products,
preferably one drop shaft (18, 33, 34, 35) being provided for each column (30, 31, 32) of products,
the drop shaft (18, 33, 34, 35) of the stacking station being adapted to let the products fall down the drop shaft (18, 33, 34, 35) accelerated by the force of gravity.

2. Thermoforming plant with stacking station (2) according to Claim 1, ***characterized in that*** the drop shafts (18, 33, 34, 35) are provided in a replaceable module.

3. Thermoforming plant with stacking station (2) according to one of the above Claims, ***characterized in that*** a fall brake is provided for laterally braking the falling products by means of friction.

4. Thermoforming plant with stacking station (2) according to one of the above Claims, ***characterized in that*** a stacking line is joined to the drop shaft (18, 33, 34, 35).

5. Thermoforming plant with stacking station (2) according to Claim 4, ***characterized in that*** the stacking line is inclined upward in the machine direction (1), preferably together with a pusher (22).

6. Thermoforming plant with stacking station according to Claim 5, ***characterized in that*** the stacking line has an ejecting brake adapted to brake products pushed in the direction for stacking by a pusher (22) at their edges.

7. Thermoforming plant with stacking station (2) according to Claim 1, ***characterized in that*** for pushing out the tipped pre-stacked products into a stack (24) in the stacking station, a pusher (22) is provided which is adapted to push the products into the stack (24) in a stacking rhythm in the stacking direction, the pusher (22) being preferably adapted to push several pre-stacks into the stack (22) simultaneously.

8. Thermoforming plant with stacking station (2) according to Claim 7, ***characterized in that*** the stacks (24) envisaged to be produced out of a column (30, 31, 32) are aligned with the respective column (30, 31, 32) of the index (3).

9. Thermoforming plant with stacking station (2) according to one of Claims 7 or 8, ***characterized in that*** the pusher (22) is adapted to selectively perform one of two pushing stages, a first pushing stage having a shorter feed and a second pushing stage having a longer feed, the first pushing stage being adapted for stacking pre-stacks and the second pushing stage being adapted for pushing out the products for further transport.

10. Thermoforming plant with stacking station (2) according to one of the above claims, the stacking station (2) having a punching unit which punches individual panels out of the index (3) and places the punched individual panels on a pre-stack conveying device which transfers the individual panels to the tipping device with a pre-stack conveyance timing; ***characterized in that*** after each punching step, the pre-stack conveyance timing performs a feed into the tipping device; with the feed preferably comprising a number of products which is lower than the number of rows of the index (3).

11. Thermoforming plant with stacking station (2) according to one of the above claims, the stacking station (2) having a punching unit which punches individual panels out of the index (3), the punching unit preferably placing the punched individual panels on a pre-stack conveying device which transfers the individual panels to the tipping device with a pre-stack conveyance timing; from where the individual panels are pushed as a pre-stack into a stack (24); ***characterized in that*** the stacking station (2) is adapted to use an alternative transport path in addition to pushing the individual panels into the stack (24), which path feeds an individual panel into scrap; the pre-stack conveying device being preferably adapted to selectively perform, alternatively to a feed to the tipping device, a transfer movement in the opposite direction; and/or a scrap collector is arranged upstream of the pre-stack conveying device and/or the drop shaft has a diverter which can be placed in the drop path.

12. Thermoforming plant with stacking station (2) according to one of the above claims, ***characterized in that*** an adjusting device for a tipping point of the products is provided at the tipping edge (13).

13. Method of manufacturing cup-shaped products in a thermoforming plant according to Claim 1, where in a first step products are punched out by means of a punching device and are pre-stacked, fall down into the drop shaft (18, 33, 34, 35) after tipping over the tipping edge (13) and are formed into a stack (24), in the horizontal position, by a pusher (22).

## Revendications

1. Installation de thermoformage pourvue d'un poste d'empilage (2), aménagé pour empiler une pluralité de produits en forme de gobelets à partir d'un index (3) en une pile (24) avec une direction d'empilage, sur le poste d'empilage (2) étant prévu un système de basculement, lequel est aménagé pour faire basculer pour l'empilage les produits en forme de gobelets d'une orientation différente de la direction d'empilage dans l'orientation de la direction d'empilage, dans l'index (3) les produits se présentant en colonnes (30, 31, 32) et en lignes (27, 28, 29), les colonnes (30, 31, 32) étant placées le long d'une direction de la machine (1) et les lignes (27, 28, 29) étant placées à la transversale de la direction de la machine (1), le poste d'empilage (2) comportant un système de pré-empilage lequel se situe en amont du système de basculement, de sorte que le système d'empilage (2) soit aménagé pour basculer simultanément en une pile préalable plusieurs produits d'une colonne (30, 31, 32), le poste d'empilage (2) étant aménagé pour éjecter les piles préalables basculées de chaque colonne (30, 31, 32) dans la direction de la machine (1) directement dans une pile (24) respectivement associée, destinée à être évacuée hors du poste d'empilage (2),
**caractérisée en ce que**
le système de basculement du poste d'empilage comporte une arête de basculement (13) pourvue d'un puits de chute (18, 33, 34, 35) qui s'y raccorde pour les produits,
de préférence pour chaque colonne (30, 31, 32) de produits étant prévu un puits de chute (18, 33, 34, 35),
le puits de chute (18, 33, 34, 35) du poste d'empilage étant aménagé pour laisser tomber les produits, accélérés par la force de gravité le long du puits de chute (18, 33, 34, 35) .

2. Installation de thermoformage pourvue d'un poste d'empilage (2) selon la revendication 1, **caractérisée en ce que** les puits de chute (18, 33, 34, 35) sont prévus dans un module interchangeable.

3. Installation de thermoformage pourvue d'un poste d'empilage (2) selon l'une quelconque des revendications précédentes, **caractérisée en ce qu'**il est prévu un frein de chute, destiné à freiner latéralement par friction les produits qui tombent.

4. Installation de thermoformage pourvue d'un poste d'empilage (2) selon l'une quelconque des revendications précédentes, **caractérisée en ce que** sur les puits de chute (18, 33, 34, 35) se raccorde un trajet d'empilage.

5. Installation de thermoformage pourvue d'un poste d'empilage (2) selon la revendication 4, **caractérisée en ce que** le trajet d'empilage est incliné en croissant dans la direction de la machine (1), de préférence en commun avec un poussoir (22).

6. Installation de thermoformage pourvue d'un poste d'empilage selon la revendication 5, **caractérisée en ce que** le trajet d'empilage comporte un frein d'éjection, lequel est aménagé pour freiner sur leurs bords des produits poussés par un poussoir (22) dans la direction destinée à l'empilage.

7. Installation de thermoformage pourvue d'un poste d'empilage (2) selon la revendication 1, **caractérisée en ce que** pour éjecter les produits pré-empilés basculés dans une pile (24), il est prévu dans le poste d'empilage un poussoir (22) qui est aménagé pour pousser les produits dans un rythme d'empilage dans la direction d'empilage dans la pile (24), le poussoir (22) étant aménagé de préférence pour pousser simultanément plusieurs piles préalables à l'intérieur de la pile (22).

8. Installation de thermoformage pourvue d'un poste d'empilage (2) selon la revendication 7, **caractérisée en ce que** les piles (24) prévues pour être créées à partir d'une colonne (30, 31, 32) sont alignées sur la colonne (30, 31, 32) associée de l'index (3).

9. Installation de thermoformage pourvue d'un poste d'empilage (2) selon l'une quelconque des revendications 7 ou 8, **caractérisée en ce que** le poussoir (22) est aménagé pour réaliser sélectivement une parmi plusieurs étapes de poussée, une première étape de poussée présentant une avance plus courte et une deuxième étape de poussée présentant une avance plus longue, la première étape de poussée étant aménagée pour empiler des piles préalables et la deuxième étape de poussée étant aménagée pour éjecter les produits pour leur transport ultérieur.

10. Installation de thermoformage pourvue d'un poste d'empilage (2) selon l'une quelconque des revendications précédentes, le poste d'empilage (2) comportant un système d'expulsion, lequel expulse hors de l'index (3) des applications spécifiques et amène les applications spécifiques sur un système de convoyage de piles préalables, lequel guide les applications spécifiques à un cadencement de pré-empilage vers le système de basculement, **caractérisée en ce que** le cadencement de pré-empilage réalise après chaque expulsion une avance dans la direction de basculement, l'avance comprenant de préférence un nombre de produits inférieur à un nombre de lignes de l'index (3).

11. Installation de thermoformage pourvue d'un poste d'empilage (2) selon l'une quelconque des revendications précédentes, le poste d'empilage (2) comportant un système d'expulsion, lequel expulse hors de l'index (3) des applications spécifiques, le système d'expulsion amenant de préférence les applications spécifiques expulsées sur un système de convoyage de piles préalables, lequel guide les applications spécifiques à un cadencement de pré-empilage vers le système de basculement, à partir duquel les applications spécifiques sont poussées sous la forme d'une pile préalable dans une pile (24), **caractérisée en ce que** le poste d'empilage (2) est aménagé en sus de pousser les applications spécifiques dans la pile (24), pour activer un trajet de transport alternatif, lequel alimente une application spécifique vers un rebut, de préférence le système de convoyage de piles préalables étant aménagé pour réaliser sélectivement, en alternative à une avance vers le système de basculement une poussée de transport dans une direction opposée et/ou en amont du système de convoyage de piles préalables étant placé un collecteur de rebuts et/ou le puits de chute comportant un élément de renvoi, susceptible d'être posé dans le trajet de chute.

12. Installation de thermoformage pourvue d'un poste d'empilage (2) selon l'une quelconque des revendications précédentes, **caractérisée en ce qu'**il est prévu un système de réglage pour un point de basculement des produits sur l'arête de basculement (13).

13. Procédé, destiné à fabriquer des produits en forme de gobelets dans une installation de thermoformage selon la revendication 1, dans un premier temps, des produits étant expulsés hors de l'index (3) au moyen d'un système d'expulsion, pré-empilés, après un basculement via l'arête de basculement (13), tombant à l'intérieur du puits de chute (18, 33, 34, 35) et étant empilés en étant couchés en une pile (24) au moyen d'un poussoir (22).
